# EUROPEAN PATENT APPLICATION

(11) **EP 3 647 275 A1**
(43) Date of publication of application: **06.05.2020**
(21) Application number: 18204376.0
(22) Date of filing: 05.11.2018
(51) Int. Cl.: C02F 1/461, C02F 1/469

(54) **FLEXIBLE, ONE-SIDED MEMBRANE-ELECTRODE ASSEMBLIES FOR USE IN ELECTROCHEMICAL PROCESSES, ELETROCHEMICAL MODULES COMPRISING THE SAME, AND METHODS FOR LIQUID DESALINATION, ION SEPARATION AND CONCENTRATION**

(71) Applicant: DWI - Leibniz-Institut für Interaktive Materialien e.V., 52056 Aachen (DE)
(72) Inventor: Linnartz, Christian J., 52062 Aachen (DE); Rommerskirchen, Alexandra, 52134 Herzogenrath (DE); Wessling, Matthias, 52074 Aachen (DE)
(74) Representative: Müller-Boré & Partner Patentanwälte PartG mbB

(57) **Abstract**

The present invention relates to a flexible membrane-electrode assembly for use in electrochemical processes, particularly in a flow-electrode capacitive deionization (FCDI) module and a corresponding apparatus. The present invention further relates to an electrochemical and/or FCDI module and a corresponding apparatus as well as methods for continuous liquid desalination and/or selective removal, separation or concentration and/or recombination of ions from liquids by capacitive deionization and/or energy storage and/or electrochemical reactions in liquids using the same.

## Description

The present invention relates to a flexible membrane-electrode assembly (MEA) for use in electrochemical processes, especially electrochemical processes involving flowable slurry-electrodes, particularly in a flow-electrode capacitive deionization (FCDI) module and a corresponding apparatus. The present invention further relates to an electrochemical and/or FCDI module and a corresponding apparatus as well as methods for continuous liquid desalination and/or selective removal, separation or concentration of ions from liquids by capacitive deionization using the same. Further applications are electrochemical slurry reactors, in which particles are charge conveyors for reactions on their surface, like waste water treatment or energy storage.

The development of environmentally friendly and energetically efficient technologies for the desalination of water is still a great challenge for supplying safe and sufficient water. Additionally, many industrial processes produce salt-rich wastewater streams. A recovery and concentration of valuable ionic components from various water streams may improve the sustainability and/or economic feasibility of various industrial processes. Besides reverse osmosis (RO) which is currently the major technology applied for seawater desalination, electrochemical processes for water desalination became very attractive alternatives to RO. In particular, an emerging technology for the removal of ions from aqueous solutions, such as the desalination of water, is capacitive deionization (CDI). CDI uses an electric field as driving force for the removal of ions present in the water, utilizing the principle of electrosorption of ions in the electrical double layer of an electrode-solution interface. When an electric field is applied between two electrodes immersed into an electrolyte solution, anions and cations are attracted by an anode and a cathode that are oppositely charged, and the ions are immobilized onto the electrode surface. The basic principle can also be used to move or recombine ions in organic solutions. Such solutions emerge within the production of lithium and the recovery of conducting salts in electrochemical synthesis. Both are processes gaining more attention in a digital electrified world.

Removing harmful chemicals from waste water, like drugs or their metabolites is another major challenge in water treatment. The degradation of such chemicals can be done via electrochemical reactions. When the chemicals get into contact with electrodes, they are oxidized or reduced to less harmful products. The surface to volume ratio is crucial in this application, thus flowable electrodes are desirable, since they offer large surface areas on the particles. These flowable electrodes are also used in super-capacitors, as means to store energy. The contact between the current collectors and the particles is the key to store capacitive energy on the particles.

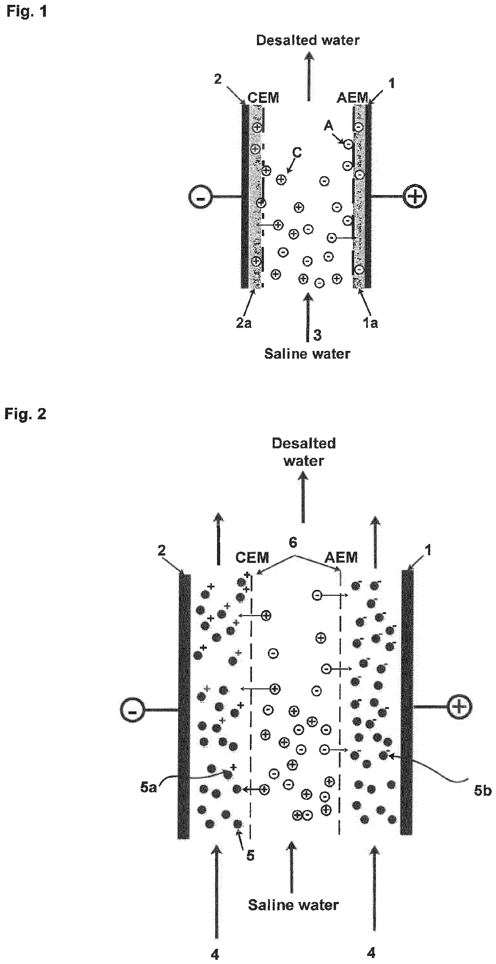

By applying ion exchange membranes (IEM), the performance of capacitive deionization has been significantly improved. As shown in Fig. 1, a basic membrane capacitive deionization (MCDI) reactor comprises two current collectors (1) and (2), porous electrodes (1a) and (2a) respectively arranged on the current collectors (1) and (2), and anion and cation exchange membranes (AEM) and (CEM) arranged on the surfaces of the porous electrodes (1a) and (2a), wherein a channel for the treatment of saline water (3) is formed between said membranes. The application of an electrical potential between the anode and the cathode results in an adsorption of anions (A) and cations (C) on the surface of the porous electrodes (1a) and (2a). The maximum applied potential is limited to a certain value, as higher potentials will result in undesired faradaic processes like electrolytic decomposition of water or electrochemical conversion of dissolved species. To be desalinated saline water (3) is passed through the channel present between the anion and cation exchanging membranes (AEM and CEM). The desorption of the ions, i.e. regeneration of electrodes, in MCDI is achieved by short circuiting or reverse polarization of the electrodes, requiring extensive piping, valves and process control.

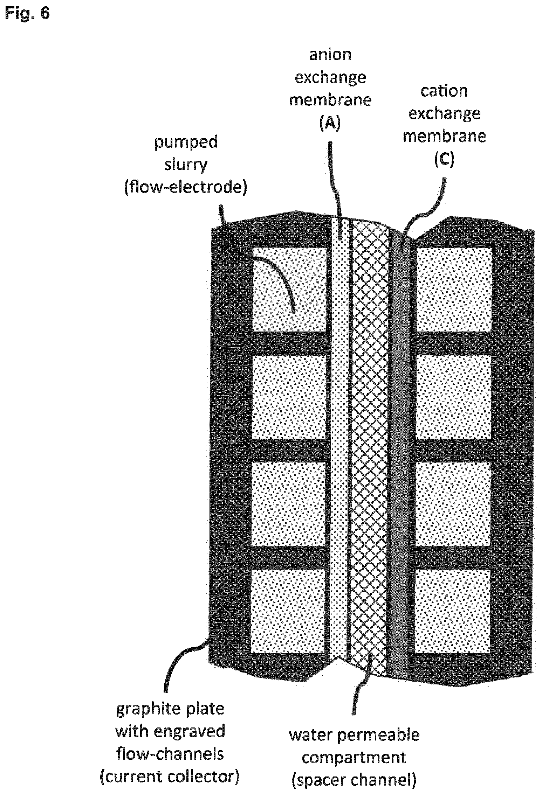

Recently, a new CDI approach termed "Flow-electrode Capacitive Deionization" (FCDI) was described in EP 2 605 326 A2 and WO 2013/103236 A1 that utilizes flowing carbon electrodes. The principle of FCDI is illustrated in Fig. 2. The basic cell comprises two fluids (4) containing suspended conductive particles (5), two current collectors (1) and (2) with engraved flow channels, anion and cation exchange membranes (AEM and CEM) applied on the current collectors (1) and (2), respectively, wherein the saline water (electrolyte) flows through an insulating spacer (6) positioned between the membranes. The fluids (4) containing suspended conductive particles (5) are also denoted as "flow-electrodes", "slurry electrodes", "flowable electrodes", or "fluidized bed electrodes" (hereinafter, said fluids are simply referred to as "flow-electrodes"). The flow-electrodes (4) are liquid-based (water-based, organic solvent-based) suspensions of porous conductive particles (5) having a high surface area, such as activated carbon. Once the conductive particles (5) come into contact with the charged current collector (1) or (2) or charged particles, they also become charged and adsorb ions (A) and (C), respectively, having the opposite charge that pass from the saline water through the anion and cation exchange membranes (AEM and CEM), respectively. A conventional FCDI module is also illustrated in Fig. 6 showing the current collectors (graphite plates) with engraved flow channels, anion and cation exchange membranes (A) and (C) applied on the current collectors, and the spacer channel (water permeable compartment) therein-between.

To render the water desalination using the FCDI process fully continuous, electrochemical regeneration of the flow-electrode using a secondary FCDI module was recently developed (Gendel et al., Electrochemistry Communications, 2014, 46, 152-156). This process is carried out by two FCDI modules, wherein a first FCDI module is used for desalination (desalination module) and a second FCDI module is used for the regeneration of flow-electrodes and simultaneous production of higher concentrated brine (regeneration module). In this principle, flow-electrodes are recirculated continuously between the two modules and the saline water is split between them into desalinated water and concentrated saline water streams. Anions and cations adsorbed on the conductive particles of the flow-electrode in the desalination module are discharged into the concentrated saline water stream, because the conductive particles reverse their polarity in the regeneration module. These regenerated conductive particles return back into the desalination module to pick up more ions from the desalinated water stream.

Further developments according to which the FCDI can be used continuously are described, for instance, in Rommerskirchen et al., Electrochemistry Communications, 2015, 60, 34-37, and in EP 3 045 431 A1. In each case, ion exchange membranes are used to separate the FCDI module into three compartments, i.e. a cathodic compartment including a cathodic flow-electrode, a feed water compartment, and an anodic compartment including an anodic flow-electrode. Compared to a conventional FCDI, said apparatus, in which two monopolar electrodes are arranged in a single module, further comprises an additional ion exchange membrane (AEM, CEM) separating the feed water into two streams for parallel desalination and concentration, since the flow-electrode from the anode current collector side is recirculated to the flow-electrode compartment of the cathode current collector on the opposite side of the module. The use of a single module may be advantageous for application, as it potentially leads to a reduced capital cost (need of only one cell, compared to two), and reduced operating costs, due to the use of only a single flow-electrode circuit requiring less pumping energy (electrical energy).

Additional advantage of CDI processes is the possibility to recover energy during the regeneration step, which has already been demonstrated for FCDI processes as well. The module according to the present invention can also be applied for such energy recovery.

As described in Yang et al., ACS Sustainable Chem. Eng., 2016, 4(8), 4174-4180, until now, electrochemical cells used for FCDI are built using usually no more than five compartments. This is mainly because the meander flow fields that determine the flow of the flow-electrode, also act as solid current collectors and are generally made of chemically inert graphite or other electrically conductive materials, such as metals. Such graphite current collectors with milled flow fields (flow channels or flow passages) are brittle and comparably thick. Stacking these current collectors leads to the following disadvantages, namely (1) a poor membrane surface per module volume ratio as well as to (2) a poor mechanical stability, since the brittle graphite material is prone to breaking at uneven load distribution. However, with regard to an industrial application of FCDI, an increase of the membrane area through stacking of modules plays an important role for designing an economically feasible process.

Moreover, FCDI modules based on graphite plates or other materials such as stainless steel or titanium are rather expensive. Another drawback when using such rigid materials as current collectors, which need to be conductive, is that the module design of such FCDI modules is restricted to planar modules.

Apart from this, many ion-exchange membranes applied in electrochemical processes use inert reinforcing fabrics (e.g. woven or non-woven polymeric fabrics). Such reinforcements improve the mechanical stability of ion-exchange membranes and additionally avoid uncontrolled swelling/wrinkling of the membranes upon contact with salt solutions. However, such reinforcements lead to a (1) increased thickness and (2) increased resistance of the membranes, which again leads to an increased applied voltage and thus an increased energy demand.

In view of the above, the object underlying the present invention is to provide a novel concept for designing ion-exchange membranes with functional reinforcement to be used in electrochemical processes e.g. as current collectors, particularly processes based on flow-electrodes, such as flow-electrode capacitive deionization, flow capacitors as in V. Presser et al., Advanced Energy Materials, 2012, 2, 895-902, electrosynthesis as in J. R. Backhurst et al., Journal of the Electrochemical Society, 1969, 116, 1600, and battery application as in M. Duduta et al.,Advanced Energy Materials, 2011, 1, 511-516, as well as a process for producing the same. A further object underlying the present invention is to provide an improved FCDI module and method for continuous water/solvent desalination and/or selective separation (i.e. removal) and/or concentration of ions from water/solvents which should overcome the aforementioned disadvantages of the current state of the art.

According to the present invention, the above object is achieved by providing a flexible, one-sided membrane-electrode assembly (MEA) for use in electrochemical processes as characterized in claim 1. The above object is also achieved by an electrochemical and/or FCDI module for continuous liquid desalination and/or selective separation and/or concentration of ions from liquids as characterized in claims 11 and 16 as well as by a method employing the same as characterized in claim 15. Preferred embodiments of the present invention are set out in the dependent claims.

Specifically, the present invention provides a flexible MEA for use in electrochemical processes, comprising a polymeric ion exchange membrane, and only one electrode arranged on the polymeric ion exchange membrane (i.e. one-sided), wherein the polymeric ion exchange membrane is an anion-exchange membrane, a cation-exchange membrane, or a bipolar membrane, and wherein the electrode consists of a flexible sheet of woven or non-woven, electrically conductive fibers.

In addition, the present invention provides a process for producing the flexible MEA in accordance with the present invention. Such production process comprises either hot-pressing of a flexible sheet of woven or non-woven, electrically conductive fibers onto a flat-sheet ion-exchange membrane, or direct incorporation of the flexible sheet of woven or non-woven, electrically conductive fibers into the surface of an ion-exchange membrane during the membrane production process.

In particular, the process comprises the following steps:
providing a flexible sheet of woven or non-woven, electrically conductive fibers,
providing a flat-sheet polymeric ion-exchange membrane, and
hot-pressing the flexible sheet of woven or non-woven, electrically conductive fibers onto the flat-sheet polymeric ion-exchange membrane by means of a laminating apparatus (e.g. hot press).

Alternatively, the process comprises the following steps:
providing a flexible sheet of woven or non-woven, electrically conductive fibers,
providing a polymer solution for the ion-exchange membrane,
casting the polymer solution onto a substrate using a casting knife (doctor blade), a flat nozzle or curtain coaters, and
applying the flexible sheet of woven or non-woven, electrically conductive fibers onto the surface of the casted polymer solution.

In another aspect, the present invention provides an electrochemical and/or flow-electrode capacitive deionization (FCDI) module for continuous liquid (i.e. water and/or solvent) desalination and/or selective separation and/or concentration and/or recombination of ions from liquids and/or energy storage and/or electrochemical reactions in liquids/electrosynthesis, comprising:
an anodic compartment containing a first flow-electrode;
a cathodic compartment containing a second flow-electrode; and
optionally at least one liquid-permeable compartment formed between the anodic compartment and the cathodic compartment,
the anodic compartment comprising a first flow passage, wherein the first flow passage is configured such that the first flow-electrode flows through said flow passage in a first flow channel embedded therein,
the cathodic compartment comprising a second flow passage, wherein the second flow passage is configured such that the second flow-electrode flows through said flow passage in a second flow channel embedded therein,
the first flow-electrode and the second flow-electrode each being an aqueous and/or (organic) solvent-based slurry containing suspended conductive particles or a mixture of conductive and non-conductive particles or particles made of a mixture of conductive and non-conductive materials,
wherein the anodic compartment and the cathodic compartment each comprise the flexible MEA according to the present invention, wherein the electrode faces the flow-electrodes, and the polymeric ion exchange membrane faces the liquid-permeable compartment when present.

In a further aspect, the present invention provides a method for continuous liquid desalination and/or selective removal, separation and/or concentration and/or recombination of ions from liquids by capacitive deionization using the module, particularly the FCDI module, according to the present invention. The method comprises the steps of:
applying a voltage or a current between the anodic and cathodic compartments;
continuously supplying feed solution (i.e. water and/or solvent) containing ionic components to at least one liquid-permeable compartment;
supplying an aqueous and/or solvent slurry containing suspended conductive particles or a mixture of conductive and non-conductive particles or particles made of a mixture of conductive and non-conductive materials into the first and second flow channels of the anodic and cathodic compartments; and
continuously discharging from the liquid-permeable compartment a solution having a lower concentration of the ionic components compared to the feed solution introduced into the liquid-permeable compartment.

According to another embodiment of the present invention, in the presence of more than one liquid-permeable compartment, the method may further comprise a step of continuously discharging from at least one other liquid-permeable compartment a solution having an increased concentration of the ionic components compared to the feed solution introduced into said liquid-permeable compartment. As will be described in more detail herein-below, this embodiment allows the parallel desalination (ion removal) and concentration.

In an alternative aspect, the present invention provides an electrochemical and/or flow-electrode capacitive deionization module for continuous liquid desalination and/or selective separation and/or concentration and/or recombination of ions from liquids and/or energy storage and/or electrochemical reactions in liquids/electrosynthesis, comprising:
a first electrode compartment containing a flow-electrode; and
a second electrode compartment containing either a fully liquid flow-electrode or a static electrode,
the first electrode compartment comprising a first flow passage, wherein the first flow passage is configured such that the first flow-electrode flows through said flow passage in a first flow channel embedded therein,
the second electrode compartment comprising either a second flow passage, wherein the second flow passage is configured such that the a fully liquid flow-electrode flows through said flow passage in a second flow channel embedded therein, or the second electrode compartment containing a liquid-permeable conductive material acting as current collector,
the first flow-electrode being an aqueous and/or solvent slurry containing suspended conductive particles or a mixture of conductive and non-conductive particles or particles made of a mixture of conductive and non-conductive materials,
the second flow-electrode being and aqueous and/or solvent electrolyte solution,
wherein the first and second electrode compartments are separated by a flexible membrane-electrode assembly as defined in any one of claims 1 to 5, the polymeric ion exchange membrane facing the second electrode compartment containing a liquid electrolyte solution, and the electrode facing the first electrode compartment containing a flow-electrode slurry.

Preferably, the above module additionally contains a gas-diffusion electrode in the first and/or second electrode compartment.

The present invention is based on a novel concept for designing the current collector of conventional FCDI modules. Contrary to FCDI modules of the state of the art, the FCDI module according to the present invention does not include thick and rigid current collectors made of graphite or other electrically conductive materials, such as metals. Instead, according to the present invention, a newly developed flexible, one-sided MEA composed of a polymeric ion exchange membrane and a conductive surface layer made of flexible, electrically conductive fibers (i.e. the electrode) is used as the current collector. The MEA of the present invention is much thinner than graphite plates conventionally used in FCDI modules, leading to a substantial reduction of FCDI cell thickness. Concurrently, employing the MEA as current collector instead of e.g. graphite plates improves the membrane/module volume ratio. Based thereon, it is possible to produce industrially feasible FCDI module stacks.

In addition, the conventionally used materials for forming the flow channels in FCDI modules (i.e. the channels engraved in the current collectors (1) and (2)) had to be electrically conductive, such as graphite, stainless steel, titanium, or similar materials, and thus are potentially rather expensive. According to the present invention, the material for forming the flow passages through which the first and second flow-electrodes flow is not restricted to an electrically conductive material. Thus, any material which is possibly much cheaper can be used for forming the flow passages of the FCDI module according to the present invention. This concept also allows comparably easy stacking of cells into larger modules, and thus makes upscaling of the process easier.

According to the present invention, besides the advantages in the module-design flexibility, the driving force for ion transport, i.e. the electrical field strength, is enhanced and the charge transfer from electrode surface to the charged particles in the flow-electrode can be improved. Formerly, carbon particles suspended in the flow-electrode had to collect a surface charge by contacting the current collector surface or by particle-particle interaction before they could collect ions from the membrane surface. According to the present invention, it is assumed that ions pass through the membrane of the MEA and pile up in the conductive surface layer of the MEA, whereby the particles suspended in the slurry (AC particles) can collect charge and an equivalent charge amount in form of ions at the same time.

Furthermore, most ion-exchange membranes used in mentioned applications need reinforcement by a woven inlay, since those membranes are prone to wrinkling due to swelling in liquid solutions. The membranes according to the present invention do not need extra reinforcement. The conductive fabric acts as functional reinforcement in the MEA, it acts as current collector and strengthens the membrane, and thus the MEAs do not wrinkle in liquid solution. Moreover, the fabric shields the membrane against abrasion of the particles in the flowable electrode.

The present invention including preferred embodiments will now be described in more detail along with the accompanying figures.

The figures show:
- Fig. 1:: A conventional MCDI reactor for water desalination, comprising two current collectors 1 and 2, porous electrodes 1a and 2a, an anion exchange membrane AEM, a cation exchange membrane CEM, and a channel for the treatment of saline water 3.
- Fig. 2:: A conventional FCDI module for water desalination, comprising two flow-electrodes 4 containing suspended conductive particles 5, two current collectors 1 and 2, an anion exchange membrane AEM, a cation exchange membrane CEM, and insulating spacer 6 through which the saline water flows.
- Fig. 3:: Illustration of hot-pressing procedure for MEA production from precast materials.
- Fig. 4:: Illustration of an integrated MEA production, wherein the conductive fiber fabric (e.g. carbon fabric) is added directly in the membrane casting process.
- Fig. 5:: Comparison of (A) a MEA after manufacture, and (B) a MEA in the swollen sate after immersing to a liquid.
- Fig. 6:: A conventional FCDI module based on conductive graphite plates with engraved flow channels used as current collectors.
- Fig. 7:: An FCDI module in accordance with the present invention (single cell pair).
- Fig. 8:: Principal illustration of the functionality of the MEA in accordance with the present invention.
- Fig. 9:: Arrangement examples of the FCDI module in accordance with the present invention, in which (A) shows a "two cell" type ("batch" type), and (B) shows a "single cell" type in terms of an AMEA-C-AMEA arrangement (reference sign "D" denotes a desalinated solution and "C" denotes a concentrated solution, same applies to Figs. 10 and 11).
- Fig. 10:: Arrangement examples for stacks of the FCDI module in accordance with the present invention, in which (A) shows "membrane stacking" in a single cell of type AMEA-C-AMEA, and (B) shows possibilities of introducing further cell pairs (A-C).
- Fig. 11:: Arrangement examples for stacks of the FCDI module in accordance with the present invention, in which (A) shows "membrane stacking" in a single cell of type CMEA-A-CMEA, and (B) shows possibilities of introducing further cell pairs (A-C).
- Fig. 12:: A design option of the FCDI module in accordance with the present invention, in which two or more electrode pairs are stacked.
- Fig. 13:: A MEA/electrode stacking example, which may be complemented by including additional membranes in between each pair of MEAs to incorporate one or more cell pairs.
- Fig. 14: Shows the reduction of thickness (black) when using graphite plates (left) compared to MEAs according to the present invention (right).
- Fig. 15:: Results of a standard desalination experiment: better or equal desalination performance.
- Fig. 16:: Comparison of normalized and averaged (20 experiments) desalination rate: better or equal MEA performance.

The present invention is based on a novel concept for designing the current collector of conventional FCDI modules. Contrary to FCDI modules of the state of the art, the FCDI module according to the present invention does not include thick and rigid current collectors made of graphite or other electrically conductive metals. Instead, according to the present invention, a newly developed flexible, one-sided MEA is used as the current collector.

The flexible MEA for use in electrochemical processes is a composite material which comprises a polymeric ion exchange membrane. The polymeric ion exchange membrane is a sheet-like material having two main surfaces. On one of the two main surfaces of the polymeric ion exchange membrane, there is provided an electrode, which consists of a flexible sheet of woven or non-woven, electrically conductive fibers. Thus, the electrode at least partially covers one of the two main surfaces of the polymeric ion exchange membrane. That means, the MEA is made of two layers, namely the ion exchange membrane and the flexible conductive surface layer. Notably, the flexible MEA according to the present invention does not include a second electrode or any conductive material on the membrane's surface opposing the electrode made of the flexible sheet of woven or non-woven, electrically conductive fibers. Preferably, the flexible MEA is composed (consists) of the polymeric ion exchange membrane and the single electrode which is present in terms of a conductive surface layer made of flexible, electrically conductive fibers.

The electrically conductive fibers are not specifically limited, provided that said material is electrically conductive and flexible. For instance, carbon fibers, titanium fibers, steel fibers or any combination thereof can be suitably used as the fiber material which is present in any form of a porous flat sheet or fabric. The fibers may be non-woven or woven, thereby forming a mesh material. According to a preferred embodiment of the present invention, the electrode is made (consists) of an uncoated or coated, woven or non-woven carbon fiber fabric, particularly preferred of a woven carbon fiber fabric, even more preferred of an uncoated woven carbon fiber fabric. The above materials are commercially available and known to a person skilled in the art.

The used electrode materials are thin, preferably between 10 µm and 400 µm. The mesh size of the fabric may be dense, and open areas may be less than 20% of the total surface. Single filaments are well connected among each other, thus a planar resistance is preferably below 5 Ohm/cm. According to a preferred embodiment of the present invention, the carbon fiber fabric has thickness of 25 to 300 µm and a simple weave with a warp of 25 to 200 tex and wefts of 50 to 200 tex.

The conductive layer of existing MEAs having an electrode pair sandwiching the ion exchange membrane, which are mainly used for fuel cells, is often either sintered or made of coated fibers. Also, existing MEAs usually contain a comparably thick gas diffusion layer.

According to a further preferred embodiment of the present invention, the flexible, electrically conductive fibers of the MEA are not coated with a non-conductive plastic material or a hydrophobic coating. Thus, no thick diffusion layer or an additional reinforcing material is present in the MEA. In such a case, it is preferred that the electrode of the MEA is an uncoated fabric of the aforementioned fibers, such as an uncoated woven or non-woven carbon fiber fabric. Compared to known ion exchange membranes, which are commonly reinforced by polymeric textiles, e.g. woven or non-woven PET, PEEK or PTFE fabrics to improve the mechanical stability and prevent wrinkling due to swelling in aqueous/solvent surroundings, in the MEAs of the present invention, the flexible sheet of woven or non-woven, electrically conductive fibers, preferably the carbon fiber woven or non-woven fabric, acts as reinforcement material. The incorporation of this flexible, conductive fabric to form a MEA, which is the object of the present invention, has been proven to improve the mechanical stability and prevent wrinkling/strong deformation of the membrane successfully, making above-mentioned polymeric reinforcements obsolete. The MEAs according to the present invention form a stable composite material, without the occurrence of delamination even when stored in (aqueous/non-aqueous) solutions over a longer period of time. Thus, the conductive fabric acting as electrode material functions as functional reinforcement, combining the function of an electrode (replacing thick current collector plates) and replace polymeric or other inert fabric materials as reinforcement for ion-exchange membranes. Another advantage of the flexible sheet of woven or non-woven, electrically conductive fibers (herein-after also simply referred to as "fabric") is that the ion exchange membrane is shielded, thereby preventing the abrasion by particles contained in the flow-electrode. The flow-electrodes contain a preferably high loading of conductive particles, such as activated carbon or other carbon species, which may lead to abrasion and accelerated degradation of the ion-exchange membranes. This functionality makes the MEAs according to the present invention a promising alternative for all kinds of electrochemical processes based on flowable slurry-electrodes (flow-electrodes), as described above. Accordingly, the electrode of the MEA is preferably a woven carbon fiber fabric not including any reinforcing material. That means, the MEA of the present invention is preferably composed of (consists of) the polymeric ion exchange membrane and the single electrode, and does not include any additional reinforcing material. Thus, compared to known ion exchange membranes, thinner membranes can be used.

As the polymeric ion exchange membrane any conventional ion exchange membrane material may be used. For instance, electrolyte membranes made of a fluorinated polymer having ion exchange groups (carboxylic acid functional groups, sulfonic acid functional groups, etc.) known in the art can be used. As additional non-limiting examples, nafion, sulfonated poly (ether ether ketone), sulfonated polystyrene, polyethylenimine, poly (acrylamido-N-propyltrimethylammonium chloride), may be mentioned.

The polymeric ion exchange membrane is either an anion exchange membrane (AEM), a cation exchange membrane (CEM), or a bipolar membrane depending on the intended electrochemical process. Such membranes are well known in the art.

The ion exchange membranes can be tailored selectively to only let specific species of anions or cations pass, such as for example monovalent ions and thus can serve to desalinate water, separate different species or kinds of ions and/or serve to selectively and/or essentially non-selectively remove or concentrate ions. This applies to the ion exchange membrane included in the MEA as well as to any ion exchange membrane (IEM) optionally separating the water-permeable compartment as will be described later.

For instance, according to the present invention, separation of more complex mixtures of electrolytes (ionic species) can be achieved by using selective ion exchange membranes. Various ionic components, including inorganic, such as various metal ions, as well as organic ionic substances, such as organic acids, may be separated selectively. Here, separation of bivalent and monovalent ions (i.e. Mg²⁺, Ca²⁺, SO₄²⁻ and Na⁺, Cl⁻) using the FCDI module and method according to the present invention are carried out. In this case, selective separation of bivalent ions is achieved due to the application of monovalent-ion-selective membranes. In these membranes, the selectivity is achieved via the rejection of ions with valence higher than 1 (or lower than -1) by the membrane, while monovalent ions pass the membrane selectively. A selective separation may also be achieved by size-exclusion or an adjustment of the hydrophilicity of the membranes. The selective separation can also be achieved using a membrane which selectively transports only specific types of ions. For example, the application of nitrate selective membranes can be used to separate nitrate ions from other monovalent and multivalent ions and produce a stream which is enriched in nitrate (concentrated stream) and/or solely contains nitrate ions. It should be noted that the present embodiment is not limited to the ionic species listed above. This principle can generally be applied for the selective removal, rejection and/or concentration of specific ionic species (electrolytes). The selectivity of the membranes can be tuned to be mono-valent ion selective over bi-valent ions, *vice versa,* or towards selectivity for a single ionic species. Ion exchange materials are known in the art as polyelectrolytes or macromolecules that obtain a charge upon contact with an ionic solution.

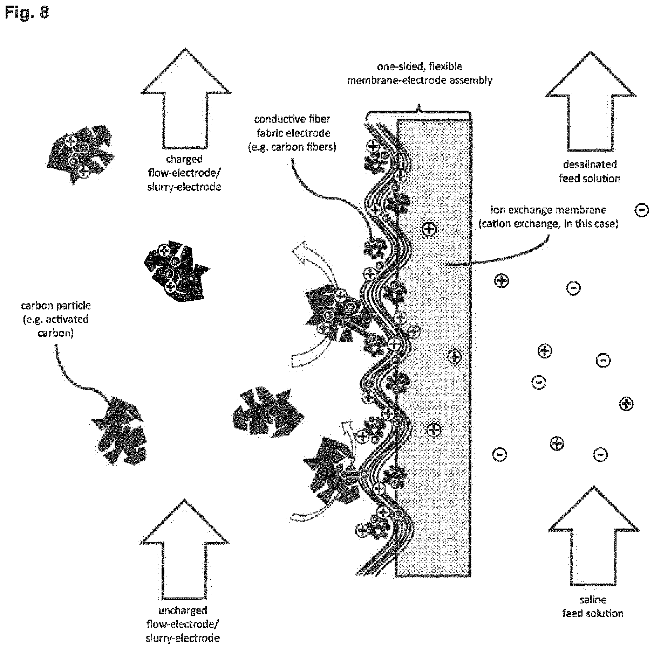

Preferably, the electrode of the MEA may be loaded (coated) with a catalyst and/or any modifiers. Possible catalysts are germanium, copper, zinc, tin, gold, silver or carbon and any oxide or mixture of those. The objective is to reduce overpotentials, increase the charge transfer at the surface, and increase the energy efficiency of electrochemical reactions. The application of catalysts on the conductive fabric of the MEAs according to the present invention may be especially advantageous for application in electrochemical processes based on flow-electrodes applied to support faradaic reactions, as required for electrosynthesis or battery applications (e.g. metal-air batteries, lithium-based batteries, other types of redox flow batteries). Apart from the application of catalysts, modifiers which improve the wettability of the flexible conductive fiber fabric (wettability modifiers) may be applied, depending on the nature of the solution (e.g. hydrophilic modification in case of aqueous solutions (hydrophilic modifier), or hydrophobic modification in case of organic solvents (hydrophobic modifier)). The wettability of the conductive fabric with the contacting solution is crucial for the correct function of the MEA according to the present invention. As illustrated in Figure 8, an intimate contact of solution with conductive fiber and ion-exchange membrane is desired to improve the electrical and ionic charge transfer to the active material (particles, e.g. activated carbon particles in case of FCDI). Hydrophilic and hydrophobic modifiers to improve wettability are known to the person skilled in the art.

Preferably, the ion exchange membrane of the MEA has a thickness of 5 to 200 µm. More preferably, the thickness of the ion exchange membrane used in the MEA is from 10 to 100 µm, still more preferably 15 to 50 µm, and most preferably 20 to 40 µm.

According to a further preferred embodiment of the present invention, the total thickness of the MEA including the fabric of electrically conductive fibers (i.e. the electrode) is preferably from 10 to 300 µm, more preferably from 20 to 100 µm.

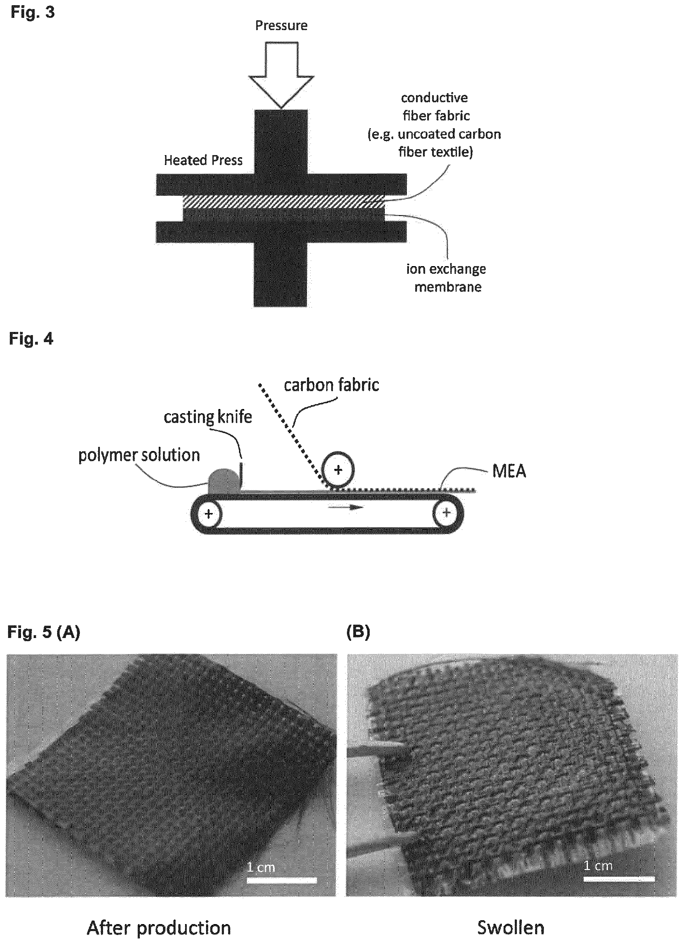

The MEA according to the present invention can be produced by conventional procedures known in the art. For instance, as shown in Fig. 3, the polymeric ion exchange membrane and the conductive fiber fabric, such as an uncoated carbon fiber textile, can be produced separately. Then, both layers are sandwiched and joined in a hot-pressing procedure employing standard conditions. Depending on the materials used, any suitable conditions (temperature and pressure) may be applied for hot-pressing. For instance, joining at 120°C and 86 N/cm² and solidifying at 25°C and 86 N/cm².

Surprisingly, as shown in Fig. 4, the flexible conductive fiber fabric can also be directly (and continuously) added in the membrane casting process without using the hot-pressing procedure. In particular, conventionally used polymer solutions for ion exchange membranes may be cast onto a suitable substrate using a casting knife, a flat nozzle or a curtain coater. The conductive fiber fabric is then applied onto the casted polymer solution. In order to ensure sufficient contact between the polymer solution and the conductive fiber fabric, which may be applied in terms of a carbon fabric, a slight pressure may be applied to the fibers. Thereafter, the assembly may be supplied to a vacuum oven for post-treatment and activation at temperatures of 100 to 200°C.

As mentioned above, the electrode of the MEA may be loaded (coated) with a catalyst and/or any modifiers. According to the present invention, such a catalyst and/or any modifiers may be introduced into the conductive fiber fabric either before, within or after the fabrication of the flexible MEA.

According to the present invention, the production process of the MEAs may further comprise a step of applying a polymer solution onto the surface of the ion-exchange membrane on the side opposing the flexible sheet of woven or non-woven, electrically conductive fibers, placing a net-shaped or otherwise patterned sheet onto said surface, and removing said net-shaped or otherwise patterned sheet from the surface of the membrane-electrode after the polymer solution has taken on a solid state. Based thereon, an integrated pattern structure is formed on the surface of the membrane-electrode assembly. That means, according to a preferred embodiment of the MEA of the present invention, the surface of the ion-exchange membrane of the membrane-electrode assembly on the side opposing the electrode comprises an integrated pattern structure. Here, the pattern structure is fabricated onto the surface of the ion-exchange membrane side of the MEA, which can act as integrated spacer forming a liquid-permeable compartment between adjacent MEAs and/or membranes.

Alternatively, the net-shaped or otherwise patterned sheet is placed onto the substrate onto which the polymer solution will be casted in a following step, wherein the net-shaped or otherwise patterned sheet is removed from the surface of the MEA after the polymer solution has taken on a solid state, to form an integrated pattern structure on the surface of the MEA.

Compared to conventional current collectors, such as thick plates of graphite, which are rigid and relatively brittle, based on such flexible MEAs, flexible current collectors can be realized. With this concept of flexible current collectors, new module designs such as spiral wound modules or other non-planar geometries can become a conceivable option to solve the space problem of conventional FCDI modules and modules for other electrochemical processes based on flow-electrodes. Apart from this, it is not so crucial to ensure an even pressure distribution in a membrane module based on flat-sheet flexible MEAs compared to using graphite plates or similar, as the flexible MEAs according to the present invention are not brittle, and thus do not break easily. The novel MEAs can adjust to uneven pressure distributions, which can lead to an automatic equalization of the pressure distribution throughout a stack. Additionally, other flat-sheet membrane designs, such as cushion modules, come into reach by using the novel, flexible MEAs.

The MEAs as produced by the present invention are shown in Fig. 5. Fig. 5 (A) displays the MEA after manufacture by a hot-pressing procedure and shows the strong connection to the membrane. As the fabric also acts as functional reinforcement, the swollen membrane, as shown in Fig. 5 (B), is hold in place and does not wrinkle much.

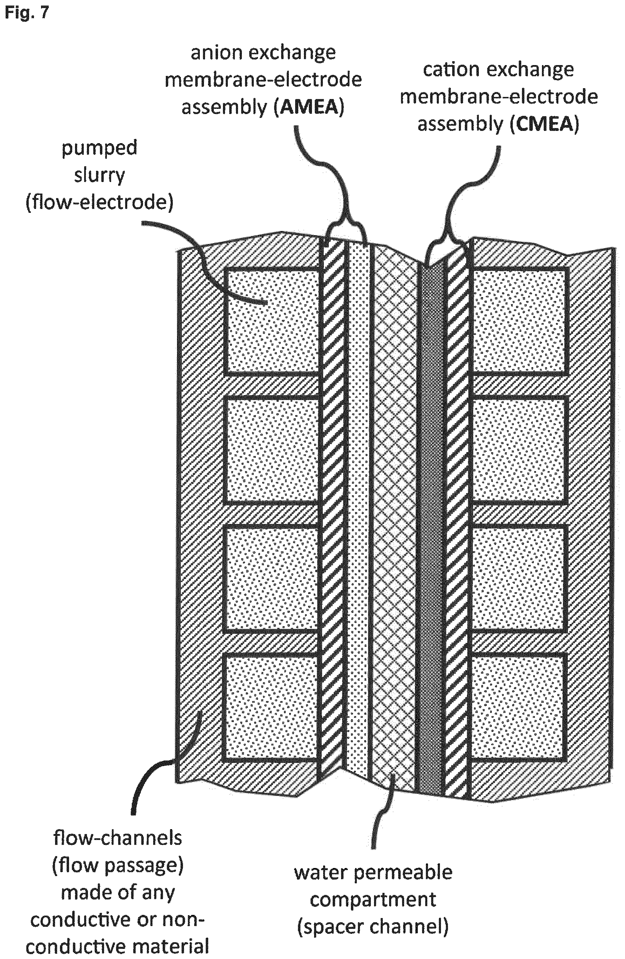

Accordingly, the present invention also relates to an FCDI module which comprises the flexible MEAs of the present invention. As shown in Fig. 7, the MEA is used as a current collector instead of conventionally used thick graphite plates having engraved flow channels for the flow-electrode. That means, according to the present invention, the FCDI module does not include rigid current collectors conventionally used for FCDI modules, i.e. made from graphite, stainless steel, titanium etc., as shown in Fig. 6.

As illustrated e.g. in Fig. 7, next to the MEA, the anodic compartment and the cathodic compartment each comprise a flow passage, which is configured such that the flow-electrode flows through said flow passage in a flow channel embedded therein. Due to the flexibility of the novel MEAs, as well as the combination of electrode and membrane, the flow passages can be made from any material, i.e. it is not restricted to be conductive like in conventional FCDI modules, or rigid materials, such as many hard polymeric materials or ceramics. According to a preferred embodiment of the present invention, the first and second flow passages are made of a non-conductive material, rigid or flexible. Non-limiting examples for possible materials to be used for the flow passages are thermoplastic materials as well as thermoplastic elastomers. In particular, the flow passages may be formed from materials selected from poly(methyl methacrylate) (PMMA), acrylonitrile butadiene styrene (ABS), polyamide (PI), polycarbonate (PC), polyether sulfone (PES), polyethylene (PE), polypropylene (PP), polyvinyl chloride (PVC, hard and soft), polytetrafluoroethylene (PTFE), polyvinylidene fluoride (PVDF), fluoro elastomers (FPM, FKM, Viton, etc.), silicone, ethylene propylene diene monomer (EPDM) and the like.

Further, the first and second flow passages can be made much thinner compared to conventional current collectors, leading to a substantial reduction of the thickness of the FCDI module, thus enabling the production of module stacks. Preferably, the thickness of the first and second flow passages is 0.1 to 5 mm, more preferably from 1 to 3 mm.

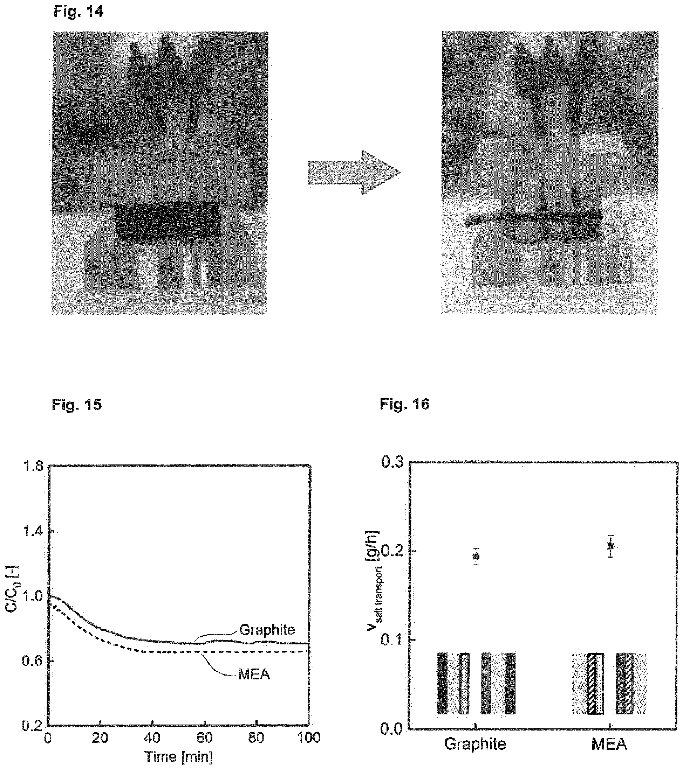

As shown in Fig. 14, the concept underlying the present invention leads to a significant reduction of thickness of the FCDI module (shown right) compared to conventional modules using graphite plates (shown left).

The FCDI module according to the present invention may have a basic configuration as shown in Fig. 2, except that the FCDI module does not contain the current collectors (1) and (2), but the MEA described above. Accordingly, the FCDI module may be a single module (i.e. two monopolar electrodes in a single cell) as shown in Fig. 7. In such a configuration, the FCDI module includes the liquid-permeable compartment (spacer channel) formed between the anodic compartment and the cathodic compartment. Within the present invention, the term "liquid" has to be generally understood as including both water and other solvents possibly containing organic solvents. Thus, even if the liquid-permeable compartment may be herein-after also referred to as "water channel", the liquid shall not be restricted to water, but also includes other solvents (the same applies to the term "liquid" generally used). The anodic compartment includes the MEA having an anion exchange membrane (i.e. an anion exchange membrane-electrode assembly - AMEA) in terms of a current collector and the first flow passage through which the first flow-electrode flows. The cathodic compartment includes the MEA having a cation-exchange membrane (i.e. a cation exchange membrane-electrode assembly - CMEA) in terms of second current collector and the second flow passage through which the second flow-electrode flows. In each case, the flow-electrode flows through said flow passage in a flow channel which is embedded in the flow passage as illustrated in Fig. 7 (i.e. the first and second flow channels).

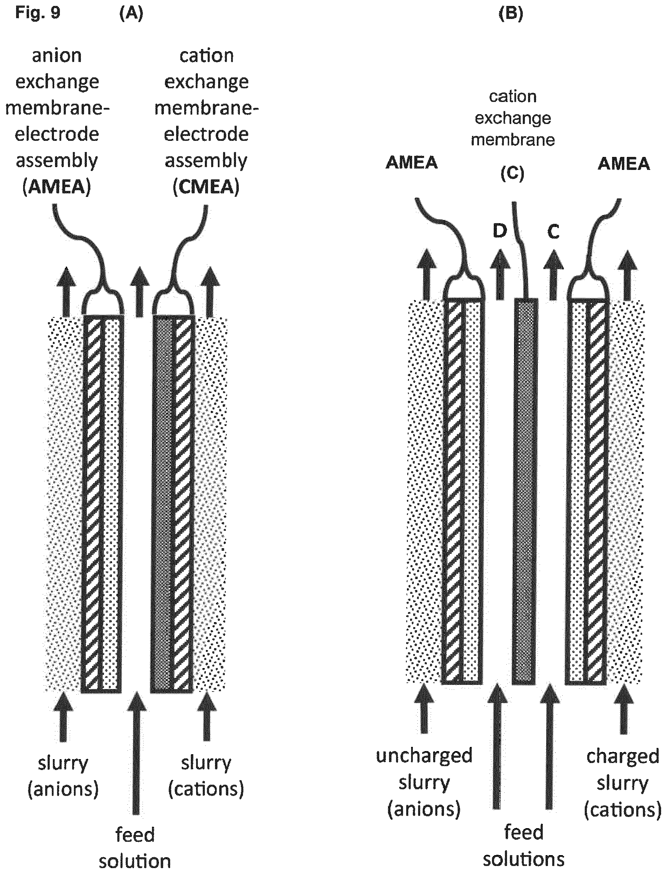

The above principle of the FCDI module according to the present invention is also shown in Fig. 9(A). As described earlier, according to the present invention, the feed solution (i.e. water or any other solvent containing ionic components) is passed through the at least one liquid-permeable compartment between the AMEA and the CMEA. The aqueous or organic solvent-based slurry containing suspended conductive particles (i.e. the flow-electrode) is supplied to the first and second flow channels of the anodic and cathodic compartments, and upon application of a voltage or a current between the anodic and cathodic compartments, a liquid (water/solvent) having a lower concentration of the ionic components compared to the feed solution can be discharged from the liquid-permeable compartment.

As mentioned above, the driving force for ion transport in the FCDI module according to the present invention is enhanced and the charge transfer from electrode surface to the charged particles in the flow-electrode can be improved. In conventional FCDI modules, carbon particles suspended in the flow-electrode had to collect a surface charge by contacting the current collector surface or by particle-particle interaction before they could collect ions from the membrane surface. According to the present invention, it is assumed that ions pass through the membrane of the MEA and pile up in the conductive fiber fabric electrode of the MEA, whereby AC particles can collect charge and an equivalent amount of charge in form of ions at the same time. This principle is schematically illustrated in Fig. 8.

As shown in Fig. 8, in case of a cation exchange membrane-electrode assembly (CMEA), cations from the feed solution pass through the cation exchange membrane of the MEA, which faces the water-/solvent-permeable compartment (spacer channel). Said cations pile up at the surface of the charged conductive fiber fabric electrode of the MEA, which faces the flow-electrode including the suspended carbon particles. The initially uncharged carbon particles suspended in the flow-electrode become charged at the electrode and, at the same time, adsorb an equivalent amount of charge in form of cations. Based thereon, the charge transfer from the surface of the electrode to the charged particles in the flow-electrode can be improved. Of course, similar considerations apply for an anion exchange membrane-electrode assembly (AMEA).

Besides, the MEA according to the present invention may also be used in an electrochemical module (cell) not including the central liquid-permeable compartment (water channel) formed between the anodic and cathodic compartments. According to said embodiment, the liquid to be treated is directly mixed with one or both flow-electrodes. The ion solution is mixed with the flow-electrode and adsorbs or reacts. In this configuration no separate liquid-permeable compartment is needed. Instead, both flow-electrodes are separated by a separator, i.e. an ion exchange membrane or the MEA according to the present invention. The cell-concept of such a configuration is also described e.g. in J.W. Campos et al., Electrochimica Acta, 2013, 98, 123-130, or in K.B. Hatzell et al., Electrochemistry Communications, 2014, 43, 18-21.

According to a preferred embodiment of the present invention, the FCDI module further comprises at least one additional ion exchange membrane (IEM) separating the liquid-permeable compartment into two or more liquid -permeable compartments. In case that one additional ion exchange membrane is present, such a configuration principally corresponds to that described in EP 3 045 431 A1. Here, the feed solution, such as water, is split into two streams for parallel desalination (ion removal) and concentration. The liquid-permeable compartment is separated by the additional IEM into two compartments located in the same module as shown in Fig. 9(B). One type of ions (anion or cation) is directly drawn from the diluate compartment (D) to the concentrate compartment (C), while the oppositely charged type of ions is drawn into the first flow-electrode compartment (i.e. anodic or cathodic compartment), where the ions are adsorbed on the surface of the charged particles suspended in the aqueous and/or solvent slurry.

This flow-electrode may be recirculated to the flow-electrode compartment on the opposite side of the module, which has an equal potential as the adsorbed ions, and thus the ions are desorbed into the concentrate compartment. Here, the first flow passage of the anodic compartment and the second flow passage of the cathodic compartment are connected to each other via a channel such that the flow-electrode is recirculated from the first flow passage to the second flow passage on the opposite site of the FCDI module.

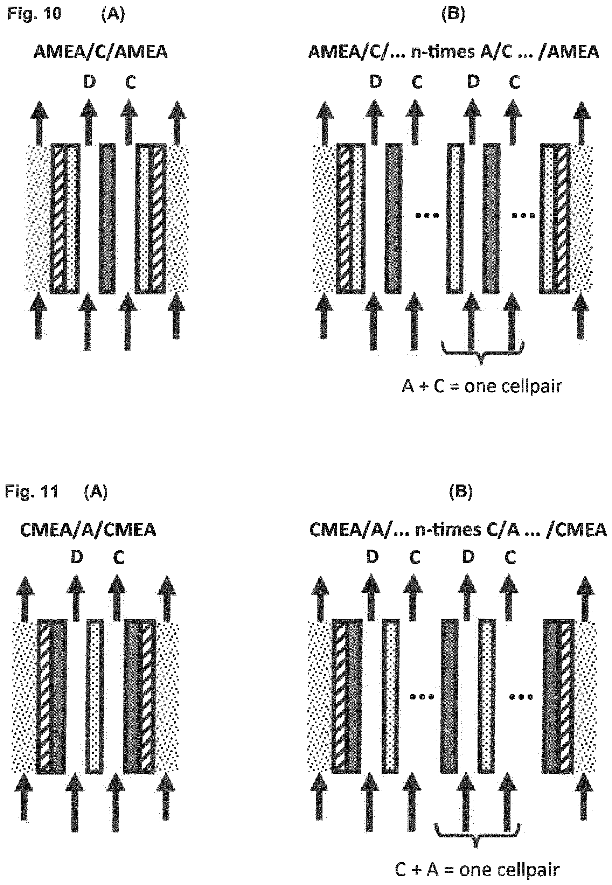

In said embodiment, the IEM separating the two water/solvent compartments has a charge opposite to the fixed charge of the ion exchange membranes of the MEAs. Notably, it does not matter whether anion or cation exchange membranes are chosen to be placed within the water-permeable compartment. However, contrary to the embodiment described with respect to Fig. 9(A), in said embodiment, the ion exchange membranes of the MEAs preferably have the same charge as illustrated in Fig. 9(B). In the embodiment shown in Fig. 9(B), the FCDI module comprises two AMEAs and one cation exchange membrane (C). By comparing Fig. 10(A) with Fig. 11(A), it is evident that any configuration of the membranes is possible.

Of course, as shown in Figs. 10(B) and 11(B), additional IEMs may be incorporated into the FCDI module. For instance, the FCDI module may comprise one additional cation exchange membrane (C) and one additional anion exchange membrane (A), or two additional cation exchange membranes (C) and one additional anion exchange membrane (A) in an alternating manner, or two additional anion exchange membranes (A) and one additional cation exchange membrane (C) in an alternating manner. The number of additional cellpairs (C+A) is not limited and may be up to 100, for instance.

The FCDI modules shown in Figs. 10(A) and (B) as well as Figs. 11(A) and (B) may also be combined with further FCDI modules, either those known in the art or in accordance with the present invention. Besides, it is not necessary that the flow-electrode is recirculated from the first flow passage to the second flow passage.

As to the IEMs separating the liquid-permeable compartment, the same materials can be used as described above in view of the ion exchange membranes included in the MEA. Additionally, any ion exchange material and any homogenous, heterogeneous and/or reinforced ion-exchange membrane can be used.

The FCDI modules described above and shown in the accompanying figures are principally illustrated in terms of planar modules. However, based on the concept underlying the present invention, according to which flexible MEAs are used as current collectors instead of e.g. graphite plates, also new module designs such as spiral wound modules or tubular geometries become a conceivable option to reduce the installation space of conventional FCDI modules.

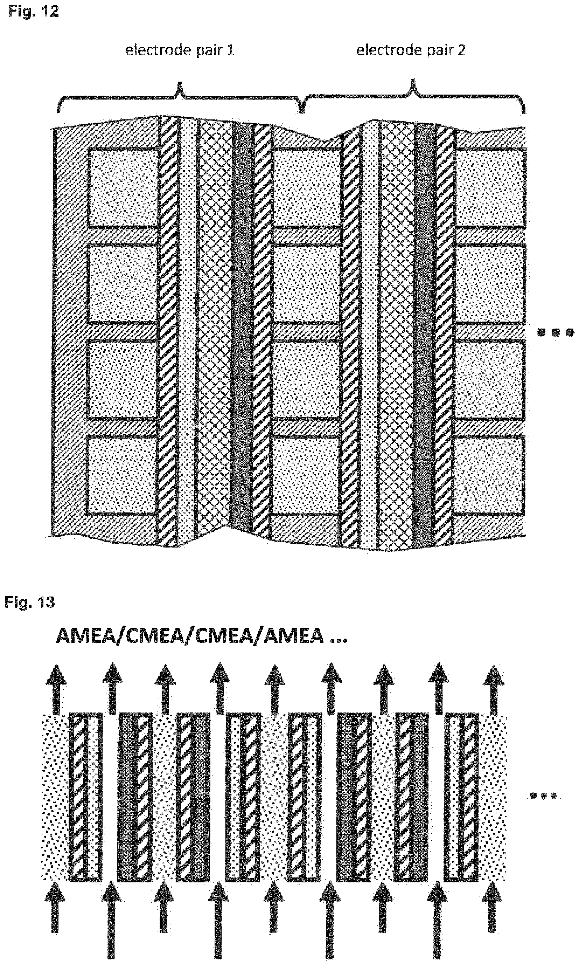

As mentioned above, according to a further embodiment of the present invention, two or more FCDI modules (cells) having MEAs instead of conventional graphite current collectors may be combined with each other. For instance, two FCDI modules (cells) may be stacked in a configuration as shown in Fig. 12. Fig. 12 shows a design option of the FCDI module in accordance with the present invention, in which two electrode pairs are stacked. However, it is also possible to stack more than two electrode pairs as shown in Fig. 13. That means, the apparatus may include additional pairs of ion exchange membranes in an alternating manner including one additional water/solvent channel per added ion exchange membrane, as illustrated in Figs. 10 and 11. Of course, the module stacks shown in Figs. 12 and 13 may also comprise one or more of the aforementioned IEMs separating the liquid-permeable compartment(s).

The at least one liquid-permeable compartment through which the feed solution (water/solvent) flows can be formed by the ion exchange membranes of the MEAs being spaced apart from each other. This also applies when an additional IEM is present. Alternatively, the water channel(s) can be formed by liquid-permeable spacers so that the feed solution flows through said spacers formed between the MEAs and/or ion-exchange membranes. Said water channels when formed by spacers (e.g. ion-conducting or insulating spacers), for example by means of polypropylene mesh, sandwiched between the MEAs, usually have a sheet or plate form, but are usually flexible. The water channel(s) may have a thickness of 0.05 to 10 mm, more preferably from 0.2 to 0.8 mm. Apart therefrom, ion-exchange membranes and MEAs with integrated spacers as in J. Balster et.al., Journal of Membrane Science 2010, 2, 185-189 may be applied to form liquid-permeable compartments.

The FCDI module according to the present invention may include further constituent parts, such as gaskets provided between the flow passages and the MEAs. Such gaskets are known to a person skilled in the art and may be made of elastomeric materials, such as EPDM rubber (ethylene propylene diene monomer rubber), fluoro elastomers (FPM, FKM, Viton, etc.), silicone or soft polyvinyl chloride (PVC).

According to the present invention, the first and second flow-electrodes may be a suspension of 1 % (w/w) to 40 % (w/w) carbon based particles, selected from activated carbons, carbon black, graphene based and CNTs based materials, in a water- or solvent-containing liquid. Preferably, the optimum particle content depends strongly on the material used as particular phase. There is a trade-off between a high particle loading, which is desired to ensure a good charge percolation within the flow-electrode, and a good flowability of the flow-electrode, meaning a low viscosity resulting in a low pressure loss within the flow-electrode channel, and the stability of the suspension. Apart from above mentioned carbon based materials, any other particle complying with properties such as (a) large ion-accessible specific surface area for application in capacitive processes (such as FCDI), (b) high electro-chemical stability, (c) fast ion mobility within the pore network, (d) high electronic conductivity, (e) low contact resistance between particle and current collector, and (f) good wetting behavior will be applicable as well. Potential materials are listed in Porada et al., Progress in Materials Science, 2013, 58(8), 1388-1442. However, the materials are not limited to these.

Preferably, the slurry may also contain ion-conducting or non-conducting particles having molecular recognition functions as to complex small organic acids, bases or amphoteric molecules. Such non-conductive particles maybe redox-responsive such that they can be switched between the two electrode compartments. They can complex in the flow-electrode compartment with the small organic acids, bases or amphoteric molecules as long as they pass the MEA and any optional ion exchange membranes. It is apparent to the person skilled in the art that the mechanism allows for the separation of smaller from larger organic acids, bases and amphoteric molecules depending on the properties of the MEA (and other ion exchange membranes) and the redox-active non-conductive particles. Generally, such ion-exchange membranes may be of the homogeneous or heterogeneous porous type.

It is also apparent to the person skilled in the art that such flow and module (cell) configurations may be of large scale for industrial separations as well as small microfluidic and analytical flow cell configurations.

As mentioned above, it is preferred that the first flow passage of the anodic compartment and the second flow passage of the cathodic compartment are connected to each other via a channel such that the flow-electrode is recirculated from the first flow passage to the second flow passage on the opposite site of the FCDI module. In such a case, it is preferred that two units are provided for breaking the continuity of the flow-electrode flowing from the first flow passage to the second flow passage and flowing from the second flow passage to the first flow passage. Preferably, the two units are drip chambers as described e.g. in EP 3 045 431 A1. These drip chambers can prevent a direct electrical current leaking between the anode and cathode through the flow-electrode. In these units, the liquid and therefore the charge continuity of the slurry is broken. If leak currents are not significant in the process performed, the chambers are not necessary.

According to another preferred embodiment of the present invention, an additional conductive material in the form of a wire, a mesh, a felt or an open-porous foam-like structure or three dimensionally shaped elements/structures (as shown in Figure 9 of EP 3 045 431 A1)) is placed inside the channels of the first and second flow passages. Particularly, said additional conductive material may be present in the form of a three-dimensionally conductive electrode that equalizes the respective slurry flow. Such elements/structures (also called flow equalization elements or static mixers) can be formed by a plurality of three-dimensional flow equalizing elements. These static mixers may also be arranged in the water/solvent channel(s), in this case preferably made out of ion-conducting materials.

In addition, another aspect of the present invention relates to methods for continuous water/solvent desalination, ion separation and selective ion removal and/or concentration by capacitive deionization using the module and apparatus, respectively, according to the present invention.

The method comprises the steps of:
applying a voltage or a current between the anodic and cathodic compartments;
(continuously) supplying feed water containing ionic components to the water-permeable compartment;
supplying an aqueous slurry containing suspended conductive particles or a mixture of conductive and non-conductive particles or particles made of a mixture of conductive and non-conductive materials into the first and second flow passages of the anodic and cathodic compartments; and
(continuously) discharging from the water-permeable compartment a water having a lower concentration of the ionic components compared to the feed water introduced into the water-permeable compartment.

According to another embodiment of the present invention, the method for continuous water desalination and/or selective removal, separation and concentration of ions from water by capacitive deionization using the FCDI module according to the present invention comprises the steps of:
applying a voltage or a current between the anodic and cathodic compartments;
continuously supplying feed water/solvent containing ionic components to the two or more liquid-permeable compartments;
supplying an aqueous/solvent-based slurry containing suspended conductive particles or a mixture of conductive and non-conductive particles or particles made of a mixture of conductive and non-conductive materials into the first and second flow passages of the anodic and cathodic compartments;
continuously discharging from at least one of the two or more liquid-permeable compartments a water/solvent having a lower concentration of the ionic components compared to the feed water/solvent introduced into said liquid-permeable compartment; and
continuously discharging from at least one other liquid-permeable compartment a water/solvent having an increased concentration of the ionic components compared to the feed water/solvent introduced into said liquid-permeable compartment.

Preferably, the slurry is continuously circulated in the first and second flow passages of the anodic and cathodic compartments such that the slurry leaving the anodic compartment is introduced into the cathodic compartment, and the slurry leaving the cathodic compartment is introduced into the anodic compartment.

In the methods according to the present invention, a voltage or a current is applied via the MEAs between the anodic and cathodic compartments. Typically, the voltage applied is from - 2 to 2 V, preferably from -1.5 to 1.5 V, more preferably from -1.3 to 1.3 V. In case of the treatment of non-aqueous solutions the potential range may be extended.

As described above, the present invention leads to a substantial reduction of FCDI cell thickness, thus enabling the production of module stacks. Also, based on the newly developed flexible MEA, which is used as the current collector, new module designs such as spiral wound modules or other non-planar geometries become a conceivable option to solve the space problem of conventional FCDI modules. Said beneficial effects can be achieved without degradation of the ion removal (desalination) performance of the FCDI module.

The present invention will be further illustrated in the following examples without being limited thereto.

### Examples

### Example 1 - Manufacturing of a MEA via hot-pressing and operation in an FCDI cell

Membrane-electrode assemblies were manufactured using a woven carbon fiber fabric (Toray, Torayca T300-1000) and (1) anion exchange membranes (fumasep FAS, unreinforced, 30 µm, fumatech BWT GmbH, Germany) or (2) cation exchange membranes (fumasep FKS, unreinforced, 30 µm, fumatech BWT GmbH, Germany). For the manufacturing of each membrane-electrode assembly, a carbon-fiber fabric and a membrane (anion or cation exchange membrane) were cut to equal size and placed on top of each other between two sheets of aluminum foil, which were inserted between the jaws of a hot-press (Belgium Agila PE30). As shown in Fig. 3, the materials were heated to 120°C and pressed with 86 N/cm² for 2.5 min, followed by a second 2 min pass in the cooling zone at the same pressure level but at a temperature of 25°C. For use in the FCDI cell, the MEAs were cut into a rectangular shape with an extension on one side, through which a rivet was bolted, as a means for electrical connection to supply a voltage.

The resulting MEAs are mechanically stable, flexible, and have the properties of ion exchange membranes. Additionally, they serve as a current collector for processes based on flowable suspension electrodes, such as flow-electrode capacitive deionization. In further experiments, the MEAs showed an ion exchange capacity equal to the original membrane used as base material. This proves that the ion exchange properties were not damaged during the hot-pressing process. The MEAs prove to be stable in aqueous solutions for several months, without detachment of the membrane from the carbon fiber. Additionally, the mechanical stability was improved, similar to standard reinforced ion-exchange membranes.

### Example 2 - Manufacturing of a MEA via direct casting

In order to demonstrate alternative manufacturing methods for the MEA in accordance with the present invention, in this example, a MEA was manufactured via direct incorporation of a carbon fiber fabric during the membrane casting process.

As shown in Fig. 4, polymer solutions (FAB, FKB, fumatech BWT GmbH, Germany) were casted onto a glass sheet at a thickness of 30 µm using a casting knife. Then, a piece of woven carbon fiber fabric (Toray, Torayca T300-1000) was placed on the surface of the casted polymer solution and gently pressed to ensure sufficient contact between the polymer solution and carbon fabric. This assembly was placed in a vacuum oven at 120°C for 2.5h for post-treatment. After post-treatment and activation, the resulting membrane-electrode assembly was removed from the glass sheet. The resulting MEA is mechanically stable, flexible and has the properties of an ion exchange membrane, and it can additionally serve as a current collector for processes based on flowable suspension electrodes, such as flow-electrode capacitive deionization.

### Example 3 - Desalination experiments - Use in an FCDI module

In order to demonstrate the beneficial effects of the MEA used in accordance with the present invention, such a MEA was manufactured via hot pressing, as described in Example 1. Afterwards, said MEA is built into an apparatus for continuous water desalination by flow-electrode capacitive deionization, which was constructed and operated as follows.

The water desalination apparatus (cell 1) was constructed and assembled as follows. Flow channels for flow-electrodes were engraved into two PMMA plates (13 x 8 cm²), with flow-channel dimensions of 3 mm width, 2 mm depth creating an active surface area of 7 x 3.2 cm². A flat-sheet gasket made of EPDM (0.5 mm) was placed on top of the first plastic plate with engraved flow channels.

A MEA made with an anion exchange membrane was placed on top of the flat gasket, with the carbon fiber side facing the flow-electrode flow channels. Next, a 0.5 mm thick liquid-permeable mesh spacer (ED-40 spacer, fumatech BWT GmbH, Germany) was placed on top of the first anion-exchange MEA, serving as a channel for the saline stream, which is to be desalinated. A second MEA made with a cation exchange membrane was placed on top of the mesh spacer, with the membrane side facing the spacer. A second flat-sheet gasket, identical to the first one, was placed on top of the second MEA. Finally, a second plastic plate with engraved flow channels was placed on the top with flow channels facing the carbon-fiber side of the second MEA. The whole cell was closed and fixed with screws.

Besides, a second flow-electrode capacitive deionization cell (cell 2) as described in Rommerskirchen et al., ACS Sustainable Chem. Eng., 2018, 6(10), 13007-13015, and stirred storage vessels for the flow-electrodes were provided.

Two slurries containing suspended conductive particles (flow-electrodes) each having a volume of 200 mL and containing 20% (w/w) of activated carbon (Carbopal SC 11PG, supplied by Donau Carbon GmbH) were recirculated between each side of the apparatus containing an anion-exchange MEA and a cation-exchange MEA (cell 1) and the second FCDI cell 2 (as described in Rommerskirchen et al., ACS Sustainable Chem. Eng., 2018, 6(10), 13007-13015) at a flow rate of 200 mL/min. A salt solution containing 5 g/L NaCl was pumped through the water channel of cell 1 at a flow rate of 2 mL/min, a second salt solution containing 5 g/L NaCl was pumped through the water channel of cell 2 at a flow rate of 2 mL/min. A voltage was supplied to the first and second MEA of cell 1 via a power supply (Keysight E3640A), which was connected to cell 1 via the rivets to each MEA. A voltage of-1.2 V was applied to cell 2, which served as a regeneration cell, to regenerate the flow-electrodes and produce a concentrated saline stream. Electrical conductivity of the influents and effluents of the apparatus (cell 1) were measured via Knick SE 615/1-MS conductivity sensors.

Fig. 15 shows the salt concentration of the effluent of cell 1 ("MEA"), normalized by the initial concentration, during the course of the experiment. The second graph plotted in Fig. 15 shows the results of an experiment under the same conditions, performed with the same setup, in which cell 1 was replaced by cell 3 ("Graphite"). Cell 3 has equal dimensions as cell 1 (except for its thickness). Cell 3 uses standard reinforced ion exchange membranes (FAB-ED 130, FKB-ED 130, fumatech BWT GmbH, Germany) and graphite plates with milled flow-channels serving as current collectors, similar to the cells described in the above article of Rommerskirchen et al.

Fig. 16 shows the salt transport rates calculated for the same experiments as plotted in Fig. 15 for the two configurations "MEA" and the reference design "Graphite". The desalination performance of the cell based on the MEAs is very comparable and even slightly better than the performance of the cell in the reference design ("Graphite").

As demonstrated above, the MEA in combination with the flow passage as used in accordance with the present invention are much thinner than graphite plates conventionally used in FCDI modules, leading to a substantial reduction of FCDI cell thickness, as it is illustrated in Fig. 14.

Concurrently, employing the MEA as current collector instead of e.g. graphite plates improves the membrane/module volume ratio, even though the desalination performance can be maintained or slightly improved. Moreover, with a flexible current collector, new module designs such as spiral wound modules or other non-planar geometries become a conceivable option to solve the space problem.

## Claims

1. A flexible membrane-electrode assembly for use in electrochemical processes, comprising a polymeric ion exchange membrane, and only one electrode arranged on the polymeric ion exchange membrane, wherein the polymeric ion exchange membrane is an anion-exchange membrane, a cation-exchange membrane, or a bipolar membrane, and wherein the electrode consists of a flexible sheet of woven or non-woven, electrically conductive fibers.

2. The flexible membrane-electrode assembly according to claim 1, wherein the electrode consists of an uncoated or coated, woven or non-woven carbon fiber fabric.

3. The flexible membrane-electrode assembly according to claim 1 or 2, wherein the electrode is loaded with a catalyst and/or modifiers.

4. The flexible membrane-electrode assembly according to any one of claims 1 to 3, wherein the thickness of the assembly is from 0.01 to 0.3 mm.

5. The flexible membrane-electrode assembly according to any of claims 1 to 4, wherein the surface of the ion-exchange membrane of the membrane-electrode assembly on the side opposing the electrode comprises an integrated pattern structure.

6. A process for producing a flexible membrane-electrode assembly according to any one of claims 1 to 5, comprising the following steps:
providing a flexible sheet of woven or non-woven, electrically conductive fibers,
providing a flat-sheet polymeric ion-exchange membrane, and
hot-pressing the flexible sheet of woven or non-woven, electrically conductive fibers onto the flat-sheet polymeric ion-exchange membrane by means of a laminating apparatus.

7. A process for producing a flexible membrane-electrode assembly according to any one of claims 1 to 5, comprising the following steps:
providing a flexible sheet of woven or non-woven, electrically conductive fibers,
providing a polymer solution for the ion-exchange membrane,
casting the polymer solution onto a substrate using a casting knife, a flat nozzle or curtain coaters, and
applying the flexible sheet of woven or non-woven, electrically conductive fibers onto the surface of the casted polymer solution.

8. The process according to claim 6 or 7, further comprising the step of loading/coating the flexible sheet of woven or non-woven, electrically conductive fibers with a catalyst and/or modifiers, wherein said step is carried out before, within or after the fabrication of the flexible membrane-electrode assembly.

9. The process according to any one of claims 6 to 8, further comprising the step of applying a polymer solution onto the surface of the ion-exchange membrane on the side opposing the flexible sheet of woven or non-woven, electrically conductive fibers, placing a net-shaped or otherwise patterned sheet onto said surface, and removing said net-shaped or otherwise patterned sheet from the surface of the membrane-electrode after the polymer solution has taken on a solid state, to form an integrated pattern structure on the surface of the membrane-electrode assembly.

10. The process according to claim 7 or 8, wherein a net-shaped or otherwise patterned sheet is placed onto the substrate onto which the polymer solution will be casted in a following step, wherein the net-shaped or otherwise patterned sheet is removed from the surface of the membrane-electrode assembly after the polymer solution has taken on a solid state, to form an integrated pattern structure on the surface of the membrane-electrode assembly.

11. An electrochemical and/or flow-electrode capacitive deionization module for continuous liquid desalination and/or selective separation and/or concentration and/or recombination of ions from liquids and/or energy storage and/or electrochemical reactions in liquids/electrosynthesis, comprising:
an anodic compartment containing a first flow-electrode;
a cathodic compartment containing a second flow-electrode; and
optionally at least one liquid-permeable compartment formed between the anodic compartment and the cathodic compartment,
the anodic compartment comprising a first flow passage, wherein the first flow passage is configured such that the first flow-electrode flows through said flow passage in a first flow channel embedded therein,
the cathodic compartment comprising a second flow passage, wherein the second flow passage is configured such that the second flow-electrode flows through said flow passage in a second flow channel embedded therein,
the first flow-electrode and the second flow-electrode each being an aqueous and/or
solvent slurry containing suspended conductive particles or a mixture of conductive and
non-conductive particles or particles made of a mixture of conductive and non-conductive materials,
wherein the anodic compartment and the cathodic compartment each comprise a flexible membrane-electrode assembly as defined in any one of claims 1 to 5, the electrode facing the flow-electrodes.

12. The module according to claim 11, further comprising at least one additional ion exchange membrane separating the liquid-permeable compartment into two or more liquid-permeable compartments.

13. The module according to claim 11 or 12, wherein the first and second flow passages are made of a non-conductive material.

14. An electrochemical and/or flow-electrode capacitive deionization apparatus comprising a plurality of the modules as defined in any one of claims 11 to 13, which are arranged in terms of a stack.

15. A method for continuous liquid desalination and/or selective removal, separation and/or concentration and/or recombination of ions from liquids by capacitive deionization using the module according to any one of claims 11 to 13 or the apparatus according to claim 14, comprising the steps of:
applying a voltage or a current between the anodic and cathodic compartments;
continuously supplying feed solution containing ionic components to at least one liquid-permeable compartment;
supplying an aqueous and/or solvent slurry containing suspended conductive particles or a mixture of conductive and non-conductive particles or particles made of a mixture of conductive and non-conductive materials into the first and second flow channels of the anodic and cathodic compartments; and
continuously discharging from the liquid-permeable compartment a solution having a lower concentration of the ionic components compared to the feed solution introduced into the liquid-permeable compartment.

16. An electrochemical and/or flow-electrode capacitive deionization module for continuous liquid desalination and/or selective separation and/or concentration and/or recombination of ions from liquids and/or energy storage and/or electrochemical reactions in liquids/electrosynthesis, comprising:
a first electrode compartment containing a flow-electrode;
a second electrode compartment containing either a fully liquid flow-electrode or a static electrode; and
optionally containing a gas-diffusion electrode in the first and/or second electrode compartment,
the first electrode compartment comprising a first flow passage, wherein the first flow passage is configured such that the first flow-electrode flows through said flow passage in a first flow channel embedded therein,
the second electrode compartment comprising either a second flow passage, wherein the second flow passage is configured such that the a fully liquid flow-electrode flows through said flow passage in a second flow channel embedded therein, or the second electrode compartment containing a liquid-permeable conductive material acting as current collector,
the first flow-electrode being an aqueous and/or solvent slurry containing suspended conductive particles or a mixture of conductive and non-conductive particles or particles made of a mixture of conductive and non-conductive materials,
the second flow-electrode being and aqueous and/or solvent electrolyte solution,
wherein the first and second electrode compartments are separated by a flexible membrane-electrode assembly as defined in any one of claims 1 to 5, the polymeric ion exchange membrane facing the second electrode compartment containing a liquid electrolyte solution, and the electrode facing the first electrode compartment containing a flow-electrode slurry.
